# EUROPÄISCHE PATENTSCHRIFT

(11) **EP 1 117 267 B1**
(45) Veröffentlichungstag und Bekanntmachung des Hinweises auf die Patenterteilung: **13.04.2005**
(21) Anmeldenummer: 01100793.7
(22) Anmeldetag: 13.01.2001
(51) Int. Cl.: H04Q 7/34, H04B 7/26

(54) **Verfahren zum Kalibrieren eines Testgerätes**
Method for calibrating a test device
Procédé de calibrage d'un appareil de test

(30) Priorität: 14.01.2000 DE 10001384
(43) Veröffentlichungstag der Anmeldung: 18.07.2001
(73) Patentinhaber: Willtek Communications GmbH, 85737 Ismaning (DE)
(72) Erfinder: Kaindl, Rolf, 85354 Freising (DE)
(74) Vertreter: Verscht, Thomas K.

(56) Entgegenhaltungen:
- SCHOBLICK, ROBERT: "Messtechnik für GSM-Funktelefone" FUNKSCHAU, Nr. 16, 1997, Seiten 64-66, XP001071210
- EBERSPÄCHER, JÖRG, VÖGEL, HANS-JÖRG: "GSM, Global System for Mobile Communication" 1997 , TEUBNER , STUTTGART XP002200276 * Seite 87 - Seite 91 *

## Beschreibung

Die Erfindung betrifft ein Verfahren zur Frequenzkalibrierung einer Testeinrichtung zum Testen von zum Betrieb an einem Mobilfunknetz vorgesehenen Funkeinrichtungen, wie z. B. Mobiltelefonen.

Ein derartiges Verfahren bezüglich des Testens von Mobiltelefonen und eine derartige Testeinrichtung ist aus dem Artikel "Meßtechnik für GSM-Mobiltelefone" von R. Schoblick aus der Fachzeitschrift "Funkschau", 1997, Nr. 16, Seiten 64 bis 66, bereits bekannt. Derartige Testeinrichtungen, die zum Austesten der Basisfunktionen und -spezifikationen eines Mobiltelefons ("Handy") eingesetzt werden, sei es bei der Herstellung, bei der Endkontrolle oder bei der Fehlersuche in schadhaften Mobiltelefonen, müssen zur Erfassung der dazu erforderlichen HF(Hochfrequenz)-Parameter des Datenübertragungsbetriebs eine hochgenaue interne Referenzfrequenz aufweisen. Da jedoch die entsprechenden in der Testeinrichtung arbeitenden Referenzfrequenzoszillatoren aufgrund von Alterungserscheinungen, Temperatureinflüssen usw. von der Sollfrequenz abweichen bzw. wegdriften können, ist eine Nachjustage dieser Sollfrequenz von Zeit zu Zeit notwendig. In der Praxis ist eine Nachkalibrierung etwa jedes Jahr erforderlich. Dazu werden hochgenaue externe Referenzfrequenzgeräte benötigt, die aufgrund der erforderlichen Präzision jedoch kostspielig sind. Insbesondere kleinere Händlerniederlassungen oder Servicestationen verfügen selten über die finanziellen Mittel, die für die Beschaffung solcher Referenzfrequenzgeräte erforderlich sind. Aber auch im Falle der Verfügbarkeit eines solchen Referenzfrequenzgeräts muß die Einhaltung der für die Testeinrichtung geforderten Sollfrequenz diese mittels des externen Frequenzstandards laufend überprüft werden, um sicherzustellen, daß die Testeinrichtung die zur Erfassung der HF-Parameter nötigen Toleranzen einhält bzw. erfüllt. Dies ist jedoch aufwendig. Andererseits kann der Einsatz einer bereits unbemerkt gebliebenen von der Sollfrequenz abgedrifteten Testeinrichtung bei der Endkontrolle bzw. Überprüfung eines Mobiltelefons dazu führen, daß das zu überprüfende Mobiltelefon schlecht eingestellt wird, was sich beispielsweise an einer Degradation der Empfangs- bzw. Übertragungsqualität zeigen kann.

Aus der Veröffentlichung "GSM Global System for Mobile Communication", Stuttgart: Teubner 1997, Seiten 87-91 von Professor Dr.-Ing. Jörg Eberspächer und Dipl.-Ing. Hans-Jörg Vogel (ISBN 3-519-06192-9) ist ein Verfahren zur Frequenzsynchronisierung eines Mobiltelefons mittels eines FCCH-Sinussignals bekannt. Das FCCH-Sinussignal ist in der Kommunikation einer aufgebauten Datenverbindung zwischen dem Mobiltelefon und dem Mobilfunknetz enthalten und dient dazu einen BCCH-Träger zweifelsfrei zu identifizieren und den Oszillator des Mobiltelefons zu synchronisieren.

Es besteht demgegenüber die Aufgabe, ein Verfahren der eingangs genannten Art derart weiterzubilden, mit dem zu einem beliebigen Zeitpunkt die Sollfrequenz des Testgeräts überprüfbar, sowie schnell und hochgenau kalibrierbar ist.

Die erfindungsgemäße Aufgabe wird in verfahrenstechnischer Hinsicht dadurch gelöst, daß eine aufgrund einer zwischen der Funkeinrichtung und dem Mobilfunknetz aufgebauten Datenverbindung etablierte Kommunikation von der Testeinrichtung passiv mitgehört wird, daß die der Kommunikation zugrundeliegenden Informationssignale von der Testeinrichtung zumindest teilweise erfaßt und ausgewertet werden, und daß basierend auf dieser Auswertung eine der Testeinrichtung zugehörende Referenzfrequenzeinheit kalibriert wird.

Charakteristisch für die Erfindung ist mithin, daß, im Gegensatz zum Stand der Technik, bei dem eine Testeinrichtung üblicherweise eingesetzt wird, um mit einem zu überprüfenden Mobiltelefon zu kommunizieren, d. h. Daten auszutauschen, die erfindungsgemäße Testeinrichtung einen Datenaustausch zwischen dem Mobiltelefon und dem Netz, insbesondere einer Basisstation, einem Telekommunikationssatelliten, und dergleichen, überwacht und bezüglich der dabei sequentiell generierten Informationssignale ein dazu korrespondierendes Zeit- und Frequenznormal als Kalibriermaßstab ermittelt, um demgegenüber einen Ab- oder Vergleich mit der internen Referenzfrequenz, welche der zentrale Taktgeber für sämtliche Messungen ist, durchzuführen. Die Kommunikation muß dabei nur teilweise erfaßt werden, da z. B. zur Frequenzkalibrierung lediglich die Burstfrequenz erforderlich ist. Der Einsatz eines teuren Referenzfrequenzgeräts erübrigt sich somit.

Ein Vorteil der vorliegenden Erfindung besteht darin, daß die Testeinrichtung "zum Nulltarif' durch Ausnutzen der netzspezifischen Frequenzgenauigkeit kalibriert werden kann.

Ein weiterer Vorteil der Erfindung besteht darin, daß kein teures Referenzfrequenzgerät und Zähler beschafft werden muß bzw. das vorhandene Testgerät nicht zu Kalibrierungszwecken an den Hersteller eingeschickt werden muß.

Schließlich besteht ein weiterer Vorteil der vorliegenden Erfindung darin, daß das erfindungsgemäße Verfahren überall dort anwendbar ist, wo ein eine Kommunikation mit dem Netz möglich ist, d. h. nahezu überall, wo Testgeräte für Mobiltelefone eingesetzt werden. Dabei kann das Netz irgendein geeignetes Netz, und insbesondere ein GSM oder PCN/PCS Netz sein.

Eine vorteilhafte Ausgestaltung des Verfahrens besteht darin, daß als Informationssignale zeitlich periodisch wiederkehrenden Bitströme verarbeitet werden, wobei als Bitströme Bursts der die Datenverbindung aufbauenden Funkeinrichtung von der Testeinrichtung analysiert werden und dadurch ein präzises Frequenznormal für die Testeinrichtung bilden.

Nach einer meßtechnisch günstigen Weiterbildung der Erfindung werden die Bursts in einem asynchronen Testmode im Sprechkanal von der Testeinrichtung analysiert.

Als zweckmäßig hat sich erwiesen, wenn eine Aufsynchronisierungsphase zwischen der Funkeinrichtung und der Basisstation abgewartet wird, bevor der Datenaustausch zwischen der Funkeinrichtung und der Basisstation passiv mitgehört wird, da nur nach einer Einschwingzeit von einigen Sekunden die von dem Mobiltelefon emittierten Bursts die von der Basisstation und dem zugehörigen Mobilfunkstandard vorgegebene Frequenz aufweisen.

Dabei wird zum Aufbau der Datenverbindung zwischen der Funkeinrichtung und der Basisstation die Funkeinrichtung initialisiert und eingebucht, um durch den Einbuchvorgang der Funkeinrichtung, also des Mobiltelefons, eine Kommunikation zwischen dem Mobiltelefon und der zugeordneten Basisstation in Gang zu bringen.

Eine vorteilhafte Verfahrensvariante sieht vor, daß zum passiven Mithören die Testeinrichtung mittels eines Powersplitters angekoppelt wird, um das der Kommunikation zwischen dem Mobiltelefon und der zugeordneten Basisstation zugrundeliegende elektromagnetische Feld anzuzapfen.

Eine dazu alternative Verfahrensvariante kann darin bestehen, daß zum passiven Mithören die Testeinrichtung mittels einer in der Nähe der Funkeinrichtung positionierten Antenne angekoppelt wird.

In vorrichtungstechnischer Hinsicht wird die oben angegebene Aufgabe bei einer Testeinrichtung dadurch gelöst, daß die Testeinrichtung einen schaltbaren passiven Mithör- oder Lauschmodus aufweist, in welchem die Testeinrichtung den Datenaustausch zwischen der Funkeinrichtung und der Basisstation abtastet und analysiert. Dabei umfaßt der Mithör- oder Lauschmodus der Testeinrichtung eine Kalibrierfähigkeit, die durch Vergleich der dem abgetasteten Datenaustausch zugrundeliegenden Informationssignale mit Signalen einer von der Testeinrichtung umfaßten Referenzfrequenzeinheit die Frequenzgenauigkeit dieser Referenzfrequenzeinheit überprüft und kalibriert.

Im Gegensatz zu herkömmlichen Testeinrichtungen, die lediglich über eine aktive Betriebsart zur Funktionsprüfung von Mobiltelefonen verfügen und somit zur Frequenzkalibrierung der internen Referenzfrequenzeinheit der Justage durch ein teures Präzisionsfrequenzgerät bedürfen, verfügt die erfindungsgemäße Testeinrichtung über einen zusätzlichen Passivmodus, mit dem auf ein durch die zwischen der Funkeinrichtung und zugeordneten Basisstation ausgetauschten Informationssignale definiertes Frequenznormal zugegriffen werden kann.

Ein vorteilhafte Weiterbildung der Erfindung kann darin bestehen, daß die Überprüfung und Kalibrierung mittels einer graphischen Echzeitdarstellungseinrichtung erfolgt, so daß sich der Einsatz zusätzlicher visueller Einstellhilfen, wie beispielsweise eines Oszillographen, erübrigt. Auf diese Weise kann der Frequenzfehler der abgehörten Burst ständig überwacht und, z. B. auch manuell, zur Kalibrierung der Testeinrichtung auf ein Minimum eingestellt werden.

Weitere bevorzugte Ausführungsformen der Erfindung sind in den abhängigen Patentansprüchen offenbart.

Die Erfindung, sowie weitere Merkmale, Ziele, Vorteile und Anwendungsmöglichkeiten wird bzw. werden nachfolgend anhand der beigefügten Zeichnung näher erläutert. Dabei bilden alle beschriebenen und/oder bildlich dargestellten Merkmale für sich oder in beliebiger sinnvoller Kombination den Gegenstand der vorliegenden Erfindung, und zwar unabhängig von ihrer Zusammenfassung in den Patentansprüchen oder deren Rückbeziehung. In den Zeichnungen zeigt:

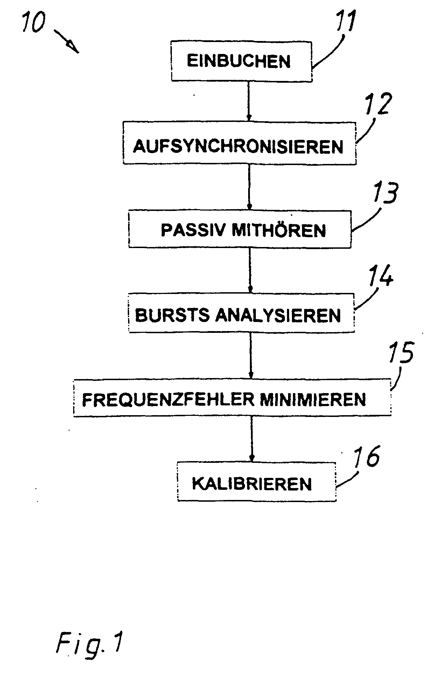

- Fig. 1: ein Flußdiagramm mit den wesentlichen Prozeßschritten des erfindungsgemäßen Verfahrens.

Da erfindungsgemäße Verfahren ist mit seinen wesentlichen Prozeßschritten in einem im Ganzen mit 10 bezeichneten Flußdiagramm in der Figur schematisch veranschaulicht. Dabei wird in einem ersten Prozeßschritt 11 des Flußdiagramms 10 eine Funkeinrichtung, die im Ausführungsbeispiel als Mobiltelefon ("Handy") ausgebildet ist, initialisiert, indem das Mobiltelefon eingeschaltet und eingebucht wird und somit eine Verbindung zum jeweiligen Mobilfunknetz aufbaut. Die Verbindung erfolgt im Sprechkanal und kann eine Datenverbindung, eine SMS-Nachricht, ein Gespräch u.s.w. sein. In einem sich daran anschließenden zweiten Prozeßschritt 12 wird eine Aufsynchronisierungsphase abgewartet, in welcher sich das Mobiltelefon nach einer Einschwingzeit von einigen Sekunden hochgenau auf die örtlich zugeordnete Basisstation aufsynchronisiert und zwar mit einer Genauigkeit von besser als Δ*v*/*v* ≈ 10 ⁻⁷ gemäß den für die Telekommunikation, insbesondere des GSM-Mobilfunknetzes, geltenden ETSI - Normspezifikationen (ETSI: European Telecommunication Standards Institute; GSM: Global System for Mobile Communications). Dabei hat die Basisstation eine Frequenzgenauigkeit, die besser als Δ*v*/*v* ≤ 10⁻⁹ ist. In einem weiteren Prozeßschritt 13 wird die erfindungsgemäße Testeinrichtung über einen "Powersplitter" oder eine in der Nähe des Mobiltelefons positionierte Antenne an die zwischen dem Mobiltelefon und der Basisstation stattfindende Kommunikation angekoppelt, wobei die Testeinrichtung in einem passiven Mithörmodus geschaltet ist. In einem asynchronen Testmodus werden dabei von der Testeinrichtung im nachfolgenden Prozeßschritt 14 die vom Mobiltelefon im Sprechkanal emittierten Bursts gemessen und analysiert. Die Messungen der Testeinrichtung zeigen auf einem Monitor den Frequenzfehler dieser Bursts, wobei dieser Frequenzfehler der Bursts nur von der Genauigkeit der Testeinrichtung bestimmt wird, da die Genauigkeit der ausgesendeten Bursts durch den ETSI-Standard gewährleistet ist und normalerweise im Bereich von Δ*v*/*v* ≈ 5 * 10⁻⁸ oder besser liegt. Im folgenden Prozeßschritt 15 wird der Referenzquarz der Testeinrichtung solange mechanisch oder elektrisch, insbesondere von Hand oder automatisch beispielsweise durch ein Softwareprogramm verstellt, bis der angezeigte Frequenzfehler der vom Mobiltelefon emittierten Bursts ein Minimum anzeigt, und die Testeinrichtung in einem abschließenden Prozedurschritt 16 kalibriert. Der Referenzquarz besitzt dann eine Genauigkeit von besser als 10⁻⁷, so daß die durch die Basisstation übernommene Genauigkeit weit ausreichend ist. Es sei bemerkt, daß die Genauigkeit dieser Mobile-Sender-Frequenz mit einem (GSM)-Tester im Mithörmodus sozusagen ausgelesen wird. Die Frequenz-Referenz des MeßSystems wird durch deren Justierung auf ein Minimum des gemessenen Frequenzfehlers abgestimmt und somit "indirekt" auf die genaue Frequenz der Basistation (via Mobiltelefon) abgestimmt. Die Frequenz-Referenz eines Testsystems bestimmt durch das Synthese-Prinzip die Empfangsfrequenz des Testers. Nur wenn die Empfangsfrequenz des Testers und die Frequenz des Mobile-Senders identisch sind, wird der gemessene Frequenzfehler zu NULL. Deshalb führt eine jegliche Veränderung der Frequenz-Referenz des Testers zu einem veränderten Meßwert des Frequenzfehlers. Ist der Frequenzfehler "Null", ist die Frequenz-Referenz des Testers auf die Genauigkeit der Basisstation oder dergleichen abgeglichen.

Die Erfindung wurde zuvor anhand eines bevorzugten Ausführungsbeispiels derselben näher erläutert. Dabei ist ein Kerngedanke das Ausnützen einer inhärenten Frequenzgenauigkeit eines Mobilfunknetzes, um ein Testgerät für Mobiltelefone zu kalibrieren. Dabei kann das Mobiltelefon insoweit auch in der Testeinrichtung integriert sein. Selbstverständlich können bei der Durchführung des Verfahrens vor der eigentlichen Frequenzkalibrierung die zum Betrieb am Netz erforderlichen Spezifikationen des Mobiltelefons getestet werden, und zwar insbesondere durch einen Verbindungsaufbau zwischen der Testeinrichtung und dem zu Kalibrierungszwecken verwendeten Mobiltelefon. Schließlich kann die -aus der Luft geholte- genaue Frequenzreferenz des Testers auch in der Folge zur weiteren Kalibrierung von Countern, Analyzern etc. benutzt werden.

## Patentansprüche

1. Verfahren zur Frequenzkalibrierung einer Testeinrichtung zum Testen von zum Betrieb an einem Mobilfunknetz vorgesehenen Funkeinrichtungen, wie z. B. Mobiltelefonen, **dadurch gekennzeichnet, daß** eine aufgrund einer zwischen einer Funkeinrichtung und dem Mobilfunknetz aufgebauten Datenverbindung etablierte Kommunikation von der Testeinrichtung passiv mitgehört wird (13), daß die der Kommunikation zugrundeliegenden Informationssignale von der Testeinrichtung zumindest teilweise erfaßt und ausgewertet werden, und daß basierend auf dieser Auswertung eine der Testeinrichtung zugehörende Referenzfrequenzeinheit kalibriert wird (16).

2. Verfahren nach Anspruch 1, **dadurch gekennzeichnet, daß** die etablierte Kommunikation eine Datenverbindung zwischen der Funkeinrichtung und einer Basisstation des Mobilfunknetzes aufweist, wobei vorzugsweise als Informationssignale zeitlich periodisch wiederkehrenden Bitströme verarbeitet werden.

3. Verfahren nach Anspruch 2, **dadurch gekennzeichnet, daß** zur Kalibrierung der Referenzfrequenzeinheit der durch die Testeinrichtung gemessene Frequenzfehler der zeitlich wiederkehrenden Bitströme minimiert wird, wobei vorzugsweise als Bitströme die Bursts der die Datenverbindung aufbauenden Funkeinrichtung von der Testeinrichtung analysiert werden (14).

4. Verfahren nach Anspruche 3, **dadurch gekennzeichnet, daß** die Referenzfrequenzeinheit elektrisch und/oder mechanisch kalibriert wird, wobei vorzugsweise die Bursts in einem asynchronen Testmode von der Testeinrichtung analysiert werden.

5. Verfahren nach einem der Ansprüche 1 bis 4, **dadurch gekennzeichnet, daß** eine Aufsynchronisierungsphase (12) zwischen der Funkeinrichtung und einer Basisstation abgewartet wird, bevor der Datenaustausch zwischen der Funkeinrichtung und der Basisstation passiv mitgehört wird (13), wobei vorzugsweise zum Aufbau der Datenverbindung zwischen der Funkeinrichtung und der Basisstation die Funkeinrichtung initialisiert und eingebucht wird (11).

6. Verfahren nach einem der Ansprüche 1 bis 5, **dadurch gekennzeichnet, daß** zum passiven Mithören die Testeinrichtung mittels eines Powersplitters und/oder einer Antenne angekoppelt wird.

7. Testeinrichtung zum Testen von zum Betrieb an einem Mobilfunknetz vorgesehenen Funkeinrichtungen, wie z. B. Mobiltelefonen, mit Mitteln zur Durchführung aller Schrifte des Verfahrens nach einem der Ansprüche 1 bis 6.

8. Testeinrichtung zum Testen von zum Betrieb an ein Mobilfunknetz vorgesehenen Funkeinrichtungen nach Anspruch 7, **dadurch gekennzeichnet, dass** zum passiven Mithören der aufgrund einer zwischen der Funkeinrichtung und dem Mobilfunknetz, insbesondere mit einer Basisstation, aufgebauten Datenverbindung etablierte Kommunikation ein passiver Mithör- oder Lauschmodus vorgesehen ist.

9. Testeinrichtung nach Anspruch 7 oder 8, **dadurch gekennzeichnet, daß** als Referenzfrequenzeinheit ein Quarz vorgesehen ist, wobei vorzugsweise die Testeinrichtung femer eine graphische Echzeitdarstellungseinrichtung aufweist.

10. Verwendung einer zum Betrieb an einem Mobilfunknetz vorgesehenen Funkeinrichtung zur Frequenzkalibrierung einer Testeinrichtung zum Testen der zum Betrieb an einem Mobilfunknetz vorgesehenen Funkeinrichtungen, **dadurch gekennzeichnet,**
**daß** eine aufgrund einer zwischen der Funkeinrichtung und dem Mobilfunknetz aufgebauten Datenverbindung etablierte Kommunikation von der Testeinrichtung passiv mitgehört wird (13), daß die der Kommunikation zugrundeliegenden Informationssignale von der Testeinrichtung zumindest teilweise erfaßt und ausgewertet werden, und daß basierend auf dieser Auswertung eine der Testeinrichtung zugehörende Referenzfrequenzeinheit kalibriert wird (16).

## Claims

1. Method for frequency calibration of a testing apparatus for testing wireless communication devices provided for operation in a mobile communication net, such as mobile telephones, **characterized in that** the testing apparatus passively listens (13) to an established communication based on a data connection built up between a wireless communication device and the mobile communication net, that the information signals underlying the communication are at least partially sampled and evaluated by the testing apparatus, and that based on this evaluation a reference frequency unit associated to the testing apparatus is calibrated (16).

2. Method according to claim 1, **characterized in that** the established communication comprises a data connection between the wireless communication device and a base station of the mobile communication net, wherein preferably bit streams, which return essentially periodical in time, are processed as information signals.

3. Method according to claim 2, **characterized in that** for a calibration of the reference frequency unit the frequency error, measured by the testing apparatus, of the bit streams returning in time is minimized for a calibration of the reference frequency unit, wherein preferably the bursts of the wireless communication device establishing the data connection are analyzed (14) by the testing apparatus as the bit streams.

4. Method according to claim 3, **characterized in that** the reference frequency unit is electrically and/or mechanically calibrated, wherein preferably the bursts are analyzed by the testing apparatus in an asynchronous test mode.

5. Method according to any of claims 1 to 4, **characterized in that** an initial synchronization phase (12) between the wireless communication device and a base station is awaited before the data exchange between the wireless communication device and the base station is passively listened to (13), wherein preferably the wireless communication device is initialized and booked in (11) for establishing the data connection between the wireless communication device and the base station.

6. Method according to any of claims 1 to 5, **characterized in that** the testing apparatus is coupled using a power splitter and/or an antenna for passively listening to the communication.

7. Testing apparatus for testing wireless communication devices provided for an operation in a mobile communication net, such as mobile telephones, comprising means for carrying out all steps of the method according to any of claims 1 to 6.

8. Testing apparatus for testing wireless communication devices provided for operation in a mobile communication net according to claim 7, **characterized in that** a passive listening or tapping mode is provided for passively listening to the established communication based on a built up data connection between the wireless communication device and the mobile communication net, in particular, with a base station.

9. Testing apparatus according to claim 7 or 8, **characterized in that** a quartz is provided as a reference frequency unit, wherein preferably the testing apparatus further comprises a graphic real time display device.

10. Use of a wireless communication device provided for operation in a mobile communication net, for frequency calibration of a testing apparatus for testing the wireless communication devices provided for operation in a mobile communication net, **characterized in that** the testing apparatus passively listens (13) to an established communication based on a data connection built up between the wireless communication device and the mobile communication net, that the information signals underlying the communication are at least partially sampled and evaluated by the testing apparatus, and that based on this evaluation a reference frequency unit associated to the testing apparatus is calibrated (16).

## Revendications

1. Procédé pour l'étalonnage de fréquence d'un appareil de test destiné à tester des dispositifs radio destinés à fonctionner dans un réseau radiotéléphonique mobile, comme par exemple des téléphones mobiles, **caractérisé en ce qu'**une communication établie à partir d'une liaison de données réalisée entre un dispositif radio et le réseau radiotéléphonique est écoutée passivement (13) par l'appareil de test, **en ce que** les signaux d'informations sur lesquels la communication est basée sont au moins partiellement détectés et évalués par l'appareil de test et **en ce que** sur la base de cette évaluation, une unité de fréquence de référence associée à l'appareil de test est étalonnée (16).

2. Procédé selon la revendication 1, **caractérisé en ce que** la communication établie comporte une liaison de données entre le dispositif radio et une station de base du réseau radiotéléphonique mobile, étant précisé qu'on traite de préférence, comme signaux d'informations, des trains de bits qui se répètent périodiquement dans le temps.

3. Procédé selon la revendication 2, **caractérisé en ce que** pour étalonner l'unité de fréquence de référence, l'erreur de fréquence des trains de bits qui se répètent dans le temps qui est mesurée par l'appareil de test est minimalisée, étant précisé que l'appareil de test analyse (14) de préférence comme trains de bits les salves de signaux du dispositif radio qui établit la liaison de données.

4. Procédé selon la revendication 3, **caractérisé en ce que** l'unité de fréquence de référence est soumise à un étalonnage électrique et/ou mécanique, étant précisé que les salves de signaux sont analysées par l'appareil de test de préférence dans un mode de test asynchrone.

5. Procédé selon l'une au moins des revendications 1 à 4, **caractérisé en ce qu'**on attend la fin d'une phase de synchronisation (12) entre le dispositif radio et une station de base, avant l'écoute passive (13) de l'échange de données entre le dispositif radio et la station de base, étant précisé que pour l'établissement de la liaison de données entre le dispositif radio et la station de base, le dispositif radio fait de préférence l'objet d'une initialisation et d'un enregistrement de localisation (11).

6. Procédé selon l'une des revendications 1 à 5, **caractérisé en ce que** pour l'écoute passive, l'appareil de test est couplé à l'aide d'un diviseur de puissance et/ou d'une antenne.

7. Appareil de test pour tester des dispositifs radio destinés à fonctionner dans un réseau radiotéléphonique mobile, comme par exemple des téléphones mobiles, comportant des moyens pour exécuter toutes les mesures du procédé selon l'une des revendications 1 à 6.

8. Appareil de test pour tester des appareils radio destinés à fonctionner dans un réseau radiotéléphonique mobile, selon la revendication 7, **caractérisé en ce que** pour l'écoute passive d'une communication établie à partir d'une liaison de données réalisée entre le dispositif radio et le réseau radiotéléphonique, en particulier avec une station de base, il est prévu un mode d'écoute passif.

9. Appareil de test selon la revendication 7 ou 8, **caractérisé en ce qu'**il est prévu comme unité de fréquence de référence un quartz, ledit appareil de test comportant aussi, de préférence, un dispositif de visualisation graphique en temps réel.

10. Utilisation d'un dispositif radio destiné à fonctionner dans un réseau radiotéléphonique mobile, pour l'étalonnage de fréquence d'un appareil de test pour tester les dispositifs radio destinés à fonctionner dans un réseau radiotéléphonique mobile, **caractérisé en ce qu'**une communication établie à partir d'une liaison de données réalisée entre le dispositif radio et le réseau radiotéléphonique est écoutée passivement (13) par l'appareil de test, **en ce que** les signaux d'informations sur lesquels la communication est basée sont au moins partiellement détectés et évalués par l'appareil de test et **en ce que** sur la base de cette évaluation, une unité de fréquence de référence associée à l'appareil de test est étalonnée (16).
